# FASCICULE DE BREVET EUROPEEN

(11) **EP 2 511 586 B1**
(45) Date de publication et mention de la délivrance du brevet: **18.06.2014**
(21) Numéro de dépôt: 12163961.1
(22) Date de dépôt: 12.04.2012
(51) Int. Cl.: F16L 59/02

(54) **Produit isolant**
Isolierendes Produkt
Isolating product

(30) Priorité: 14.04.2011 FR 1153240
(43) Date de publication de la demande: 17.10.2012
(73) Titulaire: SAINT-GOBAIN ISOVER, 92400 Courbevoie (FR); SAS Buitex Recyclage, 69470 Cours La Ville (FR)
(72) Inventeur: Hannecart, Vincent, 92600 Asnieres Sur Seine (FR); Buisson, Jean-Pierre, 69470 Couse La Ville (FR)
(74) Mandataire: Galdeano, Sophie Marie

(56) Documents cités:
- WO-A1-03/072867
- CA-C- 1 316 337

## Description

L'invention concerne un produit isolant, plus particulièrement un produit isolant fibreux.

Les produits isolants à base de laine minérale sont bien connus. Ils constituent de très bons isolants thermiques, grâce à leur structure fibreuse orientée qui limite la conductivité thermique au travers du produit. En outre, les laines minérales sont fabriquées essentiellement à partir de matières minérales, notamment naturelles ou de produits recyclés (verre recyclé), et présentent ainsi un bilan environnemental intéressant.

D'autres produits isolants, à base de fibres végétales, sont également connus. Ils constituent des isolants thermiques moins performants que les produits isolants à base de fibres minérales, essentiellement parce que la forme des fibres et les techniques de production permettent d'obtenir des produits où l'orientation et l'organisation des fibres n'est pas suffisamment contrôlée. Ces produits répondent néanmoins à une demande croissante de matériaux de construction dérivés de matières biosourcées, en particulier s'ils sont d'origine géographique locale proche du lieu de production.

Le document CA 1 316 337 C montre un example d'un produit isolant.

Il y a donc un besoin pour un produit isolant dérivé de matières biosourcées dont la performance thermique soit améliorée.

Pour cela, l'invention propose un produit isolant comprenant :
- des fibres d'origine végétale,
- des fibres liantes, et
- des nodules ou flocons de laine minérale,
les fibres d'origine végétale et/ou les fibres liantes formant des fibres d'armature organisées en réseau, et les nodules ou flocons de laine minérale étant incorporés dans des interstices du réseau de fibres d'armature

Suivant des réalisations particulières :
- les fibres d'origine végétales sont des fibres de bois ou des fibres de chanvre ;
- les fibres liantes sont en polyester ou en polyoléfine ou en polymère thermodurcissable gainé d'un polymère thermoplastique, de préférence en polyéthylène téréphtalate (PET) gainées d'une polyoléfine telle que le polypropylène (PP) ou le polyéthylène (PE) ;
- les nodules ou flocons de laine minérale sont en laine de verre avec un micronaire inférieur à 15 L/min, notamment inférieur à 12 L/min, de préférence inférieur à 10 L/min, notamment compris entre 3 et 7 L/min, tout particulièrement de 5 à 6 L/min ou en laine de roche avec un fasonaire d'au moins 250 ;
- les nodules ou flocons de laine minérale ont une longueur comprise entre 0,3 et 3 cm, notamment entre 0,5 et 2 cm ;
- le rapport massique des nodules ou flocons de laine minérale sur les fibres d'origine végétale est compris entre 85/15 et 20/80 et le pourcentage de fibres liantes est compris entre 3 et 15 % de la masse totale ;
- les fibres d'origine végétale ont un diamètre compris entre 0,8 et 55 décitex, de préférence entre 0,8 et 25 décitex ou entre 25 et 55 décitex, de façon encore préférée entre 0,8 et 17 décitex, et une longueur comprise entre 0,2 et 20 mm, de préférence entre 0,3 et 4 mm.

L'invention propose également un procédé de formation d'un produit isolant tel que décrit précédemment, comprenant les étapes suivantes :
- fourniture de fibres d'origine végétale, de fibres liantes et de nodules ou flocons de laine minérale
- mélange des fibres d'origine végétale, des fibres liantes et des nodules ou flocons de laine minérale,
- formation d'un matelas à partir du mélange par un procédé mécanique,
- passage du matelas dans une étuve.

Suivant des réalisations particulières du procédé :
- la formation du matelas est réalisée par voie aéraulique ou par aiguilletage ;
- les nodules ou flocons de laine minérale fournis sont en laine minérale du type à souffler, de préférence dépourvus de liant, et peuvent contenir des additifs anti-poussière et/ou anti-statique ;
- les nodules ou flocons de laine minérale fournis sont issus d'une laine minérale ayant une résistance au passage de l'air supérieure ou égale à 10 kPa.s/m² pour une densité supérieure ou égale à 15 kg/m³.

L'invention se rapporte à un produit isolant comprenant des fibres d'origine végétale, des fibres de liant, et des nodules ou flocons de laine minérale. Elle est parvenue à offrir une combinaison de laine minérale et de fibres d'origine végétale, qui a un meilleur pouvoir isolant que celui d'un produit en fibres d'origine végétale.

Ainsi, selon l'invention, les fibres d'origine végétale et/ou les fibres de liant forment des fibres d'armature organisées en réseau, et les nodules ou flocons de laine minérale sont incorporés dans des interstices du réseau de fibres d'armature. Ainsi, les flocons ou nodules remplissent les trous du réseau de fibres d'armature, et s'opposent à la circulation d'air dans ces espaces, laquelle est sinon source de pertes thermiques. Ceci permet d'obtenir un produit isolant avec une conductivité thermique bien inférieure à la conductivité thermique d'un matelas conventionnel en fibres d'origine végétale.

Le produit isolant de l'invention est un matelas isolant qui peut se présenter sous forme panneaux ou de rouleaux. Il est constitué de fibres d'origine végétale, telles que des fibres de bois ou toutes fibres végétales, de fibres liantes et de nodules ou flocons de laine minérale. Les fibres liantes permettent d'assembler et lier les fibres entre elles. Les fibres liantes confèrent au produit une résistance mécanique mais aussi une résilience pour donner de la cohésion au produit, ce qui permet sa manipulation sous forme de panneau ou rouleau de matelas.

Dans la suite de la description on parlera de façon non limitative de fibres de bois, comme une forme préférée de fibres d'origine végétale, mais il est entendu que ce terme signifie de manière générale les fibres d'origine végétale utiles selon l'invention.

Le produit isolant est constitué de fibres d'armatures organisées en réseau, avec des interstices formés entre celles-ci.

En fonction du diamètre des fibres végétales ainsi que des fibres minérales, la taille et le diamètre des fibres thermoliantes seront adaptées.

De façon préférée, les fibres d'origine végétale, si elles sont suffisamment longues (typiquement au-dessus de 20 mm) constituent majoritairement les fibres d'armature. Si elles sont trop courtes (typiquement en dessous de 20 mm), ce sont les fibres liantes qui constituent majoritairement les fibres d'armature. En variante, par exemple lorsque les fibres d'origine végétale sont relativement peu nombreuses, par exemple dans une composition de produit isolant avec un rapport massique de nodules ou flocons de laine minérale sur fibres d'origine végétale de 85/15, les fibres liantes et les fibres d'origine végétale constituent toutes les deux les fibres d'armature. Des fibres d'origine végétale ou des fibres liantes, qui seraient trop courtes pour constituer des fibres d'armature, peuvent être présentes, dans le réseau ou ses interstices. Ainsi, l'armature peut être constituée par la combinaison de fibres liantes et de fibres d'origine végétale.

Les nodules ou flocons de laine minérale sont des fibres en paquets, et non des fibres individualisées comme les fibres liantes ou les fibres de bois, ce qui leur permet de combler de façon appropriée les interstices du réseau de fibres d'armature, et ainsi de diminuer la conductivité thermique de l'ensemble en empêchant l'air de pouvoir circuler à travers le produit isolant.

Les nodules ou flocons de laine minérale sont de préférence en laine de verre, avec un micronaire de préférence inférieur à 15 L/min, notamment inférieur à 12 L/min, de préférence inférieur à 10 L/min, notamment compris entre 3 et 7 L/min, tout particulièrement de 5 à 6 L/min. Le diamètre moyen des fibres est alors de préférence inférieur à 2 µm, voire même à 1 µm. Le micronaire est mesuré selon la méthode décrite dans le document WO-A-03/098209.

En variante également avantageuse, les nodules ou flocons de laine minérale sont en laine de roche avec un fasonaire d'au moins 250. Le fasonaire est déterminé de la façon suivante : on pèse une éprouvette (5g) constituée par une touffe de laine minérale exempte d'huile et de liant mais pouvant comporter des composants non fibreux (slug). Cette éprouvette est comprimée dans un volume donné et est traversé par un courant de gaz (air sec ou azote) maintenu à débit constant. La mesure de fasonaire est alors la perte de charge à travers l'éprouvette, évaluée par une colonne d'eau graduée en unité conventionnelle. Classiquement, un résultat de fasonaire est la moyenne des pertes de charge observées pour dix éprouvettes.

Les nodules ou flocons de laine minérale ont une longueur comprise entre 0,05 et 3 cm, notamment entre 0,1 et 1 cm. Ces flocons ou nodules sont formés de fibres qui s'enchevêtrent sous forme de petits paquets, petites mèches ou « bouloches ». Par longueur des flocons ou nodules, on entend dans la présente description la longueur de ces paquets dans leur plus grande dimension.

Les nodules ou flocons de laine minérale sont par exemple des flocons en laine de verre du type utilisé pour l'isolation en laine soufflée, par exemple du type des laines commercialisées par les sociétés Saint-Gobain Isover sous les marques Comblissimo® ou Kretsull® ou par la société Certainteed sous la marque Insulsafe®. Ces flocons sont généralement dépourvus de liant et peuvent contenir des additifs anti-poussière et/ou anti-statique tels que des huiles. En variante, des nodules ou flocons contenant une petite quantité de liant, inférieure à 6% en masse sèche par rapport à la masse des nodules, peuvent être utilisés, par exemple dans le cas de laine minérale (verre ou roche) nodulée obtenue à partir d'un matelas. Les nodules ou flocons de laine minérale fournis sont par exemple issus d'une laine minérale ayant une résistance au passage de l'air supérieure ou égale à 10 kPa.s/m² pour une densité supérieure ou égale à 10 kg/m³.

Les fibres d'origine végétales, typiquement en bois ou en chanvre, ont un diamètre compris entre 0,8 et 55 décitex, de préférence entre 0,8 et 25 décitex ou entre 25 et 55 décitex, de façon encore préférée entre 0,8 et 17 décitex, et une longueur comprise entre 0,2 et 20 mm, de préférence entre 0,3 et 4 mm.

Les fibres liantes ont un diamètre compris entre 0,8 et 17 décitex et une longueur comprise entre 0,8 et 70 mm, par exemple un diamètre de 4,4 décitex et une longueur de 51 mm.

Ainsi, on peut choisir les nodules ou flocons de laine minérale ayant des dimensions adéquates pour combler les interstices créés dans le réseau de fibres d'armature d'origine végétale et/ou de fibres liantes. Alternativement ou en complément, on peut choisir des fibres d'armature spécialement compatibles avec des nodules de fibres minérales sélectionnés pour leur pouvoir isolant thermique élevé.

Le rapport massique des nodules ou flocons de laine minérale sur les fibres d'origine végétale est généralement compris entre 85/15 et 20/80, les bornes étant incluses. Ainsi ce rapport massique est par exemple égal à 85/15, 80/20, 65/35, 70/30, 60/40, 50/50, 40/60, 35/65, 30/70 ou 20/80. Comme on le verra plus loin, la conductivité thermique et la résistance au passage de l'air varient en fonction de ce rapport massique. De plus, la couleur du produit isolant varie en fonction de ce rapport massique. En effet, la fibre de bois est marron tandis que la laine minérale est généralement de couleur différente. Le produit isolant selon l'invention permet donc de proposer une gamme de produits de différentes nuances, chaque nuance correspondant à un rapport massique des fibres des nodules ou flocons de laine minérale sur les fibres d'origine végétale, et pouvant être associée à une conductivité thermique ou à une autre propriété représentative du pouvoir isolant.

Le taux de liant est compris entre 3 et 15 % de la masse totale. Il doit être suffisant pour assurer une bonne cohésion du matelas isolant, notamment lorsqu'il est manipulé, et le moins important possible pour limiter les coûts et limiter les apports de produits polymères à fonction mécanique. Le taux de laine minérale est compris entre de 5 à 95 % de la masse totale. Le taux de fibres d'origine végétale est compris entre de 5 à 95 % de la masse totale.

Les fibres liantes sont thermofusibles avec une température de ramollissement comprise entre 110 à 250°C de façon à être inférieure à la température de dégradation des fibres d'origine végétale. Elles sont par exemple en polyester ou en polyoléfine (polyéthylène ou polypropylène) ou de structure bi-composant avec une âme en polymère thermodurcissable gainé d'un polymère thermoplastique, par exemple des fibres de polyéthylène téréphtalate (PET) gainées d'une polyoléfine telle que le polypropylène (PP) ou le polyéthylène (PE). D'autres fibres bi-composant peuvent être utilisées, de préférence dans lesquelles un polymère est dérivé de ressources renouvelables telle que décrite dans le document US 2009/068430. Des liants biosourcés peuvent également être utilisés, à base d'amidon par exemple.

Le produit isolant de l'invention est réalisé par un procédé mécanique, également objet de l'invention.

Dans ce procédé, des fibres d'origines végétales, des fibres liantes et des nodules ou flocons de laine minérale, tels que décrits plus haut, sont fournis, conditionnés en balles de matériau comprimé.

Les nodules ou flocons en laine de verre sont par exemple produits par fibrage, au moyen d'un dispositif de centrifugation interne comprenant un centrifugeur, ou assiette de centrifugation, apte à tourner autour d'un axe vertical et dont la bande périphérique est percée d'une pluralité d'orifices. Un panier à fond plein est associé au centrifugeur sans fond. La paroi cylindrique du panier est percée d'un petit nombre d'orifices relativement gros, par exemple d'un diamètre de l'ordre de 3 mm. Un filet de verre fondu alimente le centrifugeur et s'écoule dans le panier. Le verre fondu, par passage au travers des orifices du panier, est alors distribué sous forme de filets primaires et dirigés vers l'intérieur de la bande périphérique d'où ils sont expulsés au travers des orifices de l'assiette sous l'effet de la force centrifuge sous forme de filaments. Le débit du matériau fondu arrivant dans le centrifugeur est inférieur à 18 tonnes/jour pour un centrifugeur présentant un nombre d'orifices d'au moins 32000, et de préférence d'au plus 14 tonnes/jour et d'un nombre d'orifices pour un centrifugeur présentant un nombre d'orifices d'au moins 36000.

L'assiette de centrifugation présente un diamètre compris entre 200 et 800 mm, de préférence égal à 600 mm. La hauteur de bande de perçage de l'assiette, hauteur sur laquelle s'étalent les orifices, n'excède pas 35 mm.

L'assiette contient deux zones annulaires ou plus superposées l'une à l'autre, les orifices du centrifugeur présentant d'une zone à une autre des rangées d'orifices de diamètre différent et le diamètre par rangée annulaire étant décroissant du haut vers le bas de la bande périphérique de l'assiette en position de centrifugation. Le diamètre des orifices est compris entre 0,5 et 1,1 mm.

La distance entre les centres des orifices voisins de la même zone annulaire est essentiellement constante dans toute une zone annulaire, cette distance variant d'une zone à l'autre d'au moins 3 % ou même d'au moins 10 % et diminuant du haut vers le bas de la bande périphérique de l'assiette en position de centrifugation, avec en particulier une distance comprise entre 0,8 mm et 2 mm.

Le dispositif de centrifugation interne comprend également un dispositif d'étirage gazeux, constitué d'un brûleur annulaire qui délivre un courant gazeux à température et vitesse élevées en longeant la paroi du centrifugeur. Ce brûleur sert à maintenir la température élevée de la paroi du centrifugeur et contribue à l'amincissement des filaments pour les transformer en fibres. Le courant gazeux d'étirage est généralement canalisé au moyen d'une nappe gazeuse froide enveloppante. Cette nappe gazeuse est produite par une couronne de soufflage entourant le brûleur annulaire. Froide, elle permet de plus d'aider au refroidissement des fibres dont la résistance mécanique est ainsi améliorée par un effet de trempe thermique. La température du jet gazeux à la sortie du brûleur est comprise entre 1350 et 1500°C, de préférence aux environs de 1400°C.

L'obtention de fibres de laine minérale fines est réalisée par les réglages de différents paramètres que sont en particulier :
- la pression du brûleur, entre 450 et 750 mm CE (colonne d'eau) (on rappelle que 1 mm CE = 9,81 Pa) ;
- la vitesse de rotation de l'assiette, supérieure à 2000 tours/minute ; et
- la tirée de fibres que fournit par jour chaque orifice de l'assiette, à au plus 0,5 kg, et de préférence à au plus 0,4 kg. La tirée de fibres délivrée par une assiette est d'autant plus faible que le diamètre de l'assiette est petit.

Une pression du brûleur de 500 mm CE permet d'engendrer des fibres de micronaire de 5,5 L/mn.

Les fibres de laine minérale sont mises en nodules comme expliqué dans le document FR-A-2 661 687.

Les fibres d'origine végétale, en particulier les fibres de bois, peuvent être préparées comme indiqué ci-après.

Les fibres de bois sont issues de rondins de bois résineux. Les rondins sont découpés en plaquettes en forme de disque de diamètre maximal 3 cm et d'épaisseur comprise entre environ 10 mm et environ 40 mm.

Les plaquettes subissent ensuite une augmentation de température comprise entre 70°C et 90°C et sont ramollies par injection de vapeur.

Le taux d'humidité des plaquettes est ensuite régulé entre 80% et 140%, de préférence à environ 140%, de façon à obtenir les meilleures conditions pour le défibrage. L'excès d'eau est évacué par un tube percé d'une pluralité d'orifices.

Les plaquettes souples et dilatées sont ensuite défibrées au moyen d'un dispositif de défibrage. Le dispositif de défibrage comprend un disque statique et un disque rotatif comprenant des segments de hauteur 42 mm et tournant à une vitesse de1500 tr/min. Les deux disques sont disposés verticalement, parallèlement l'un à l'autre, et les plaquettes passent entre les deux disques. Plus la hauteur des segments est restreinte, plus le diamètre des fibres extraites des plaquettes est petit.

Les fibres extraites des plaquettes peuvent subir un traitement par exemple ignifugeant et/ou anti- humidité et/ou anti-statique et/ou anti-fongique et/ou hydrophobe.

Les fibres de bois sont ensuite séchées pour diminuer leur taux d'humidité. A la fin du séchage, le taux d'humidité des fibres de bois est compris entre 10 et 25 %.

Plus les fibres sont fines et régulières, plus la résistivité thermique du produit isolant est élevée.

Dans le procédé selon l'invention, les fibres d'origine végétale, les fibres liantes et les nodules ou flocons de laine minérale sont tout d'abord mélangés. Les balles de matériaux comprimés sont ouvertes. Les fibres ou les nodules ou flocons sont aérés pour faciliter le mélange. Chaque type de fibres ou de nodules ou flocons est chargé par un dispositif de chargement différent sur un convoyeur collecteur. Cela permet d'ajuster facilement les quantités de chaque matière. Le mélange pénètre dans une pré-ouvreuse, machine comprenant un cylindre de diamètre 750 mm muni de pointes radiales de diamètre 0,8 mm et tournant à une vitesse de 700 tr/min. La pré-ouvreuse permet mélanger les fibres et les nodules ou flocons les uns aux autres de façon intime. Pour homogénéiser encore le mélange de fibres et de nodules ou flocons, celui-ci est introduit dans une ouvreuse, par exemple une ouvreuse de nom « EXEL » commercialisée par la société Laroche. L'ouvreuse permet de peigner et affiner les fibres et les nodules ou flocons. L'ouvreuse comprend un cylindre de diamètre 500 mm avec 75 000 pointes inclinées de diamètre 0,8 mm. L'ouvreuse a par exemple une largeur de 2 m. A l'entrée de l'ouvreuse, le mélange de fibres et de nodules ou flocons est introduit entre un rouleau et une auge, ce qui permet de maintenir les fibres et les nodules ou flocons serrés les uns contre les autres pendant le travail de l'ouvreuse.

Les fibres d'origine végétale, les fibres liantes et les nodules ou flocons de laine minérale une fois mélangés sont mis sous forme d'un matelas par un procédé mécanique tel que par exemple par voie aéraulique (« airlay ») ou par aiguilletage. Le procédé de mise en forme par voie aéraulique est par exemple réalisé par la machine de nom « Airlay Flexiloft » commercialisée par la société Laroche.

Le mélange de fibres et de nodules ou flocons est introduit dans un dispositif de nappage. Le dispositif de nappage comprend une cheminée permettant de répartir les fibres et les nodules ou flocons de façon uniforme sur la largeur du dispositif. Un cylindre avec 85 000 pointes radiales et tournant à une vitesse de 600 tr/min, est disposé dans la cheminée et assure la répartition homogène des fibres ou des nodules ou flocons en les projetant sur un tapis inférieur perforé aspirant pour former une nappe de fibres et nodules ou flocons. Le tapis inférieur perforé aspirant permet également d'orienter les fibres ou les nodules ou flocons situés sur la partie inférieure de la nappe. Un rouleau supérieur perforé aspirant positionné sur la nappe de fibres et nodules ou flocons permet d'orienter les fibres ou les nodules ou flocons situés sur la partie supérieure de la nappe. Le poids de la nappe est contrôlé par une source radio-active, ce qui permet d'ajuster la densité de la nappe en temps réel en ajustant la vitesse de rotation du cylindre, la géométrie de la cheminée et/ou les flux d'aspiration inférieur et supérieur.

La nappe ainsi obtenue est ensuite passée dans un four pour fixer le liant et consolider le matelas en vue de sa manipulation.

Le four de thermo-fixation comprend en enfilade quatre chambres de chauffage et deux chambres de refroidissement. La température dans les chambres de chauffage augmente progressivement, par exemple de 120°C à 200°C, en passant d'une chambre à la suivante. Cela permet de ramollir les fibres liantes et d'obtenir une homogénéité de réticulation des fibres liantes. Une ventilation de vitesse ajustable est assurée dans les différentes chambres. Les fibres thermofusibles ramollies devenues collantes créent une jonction avec les fibres d'origine végétale et les nodules ou flocons de laine minérale, ce qui permet d'obtenir une cohésion entre toutes les fibres et nodules ou flocons. Lorsque la nappe arrive dans les chambres de refroidissement, elle subit un choc thermique en passant par exemple d'une température de 200°C à une température de 40°C. Les fibres liantes thermofusibles redeviennent alors rigides. Le produit isolant tel que décrit plus haut est alors figé.

Le procédé décrit permet de réaliser un produit isolant tel que décrit plus haut, très bon isolant thermique.

Des mesures de conductivité thermique ont été réalisées sur le produit isolant objet de l'invention et obtenu par le procédé selon l'invention. On rappelle que la conductivité thermique λ d'un produit est la capacité du produit à se laisser traverser par un flux de chaleur; elle est exprimée en W/(m.K). Plus cette conductivité est faible, plus le produit est isolant, et meilleure est donc l'isolation thermique.

Des éprouvettes du produit isolant selon l'invention ont été conditionnées en stabilisation en poids à 23°C pour un taux d'humidité relative (HR) de 50%. Les mesures ont été réalisées à 10°C sur un appareil de type R-Matic suivant la norme ISO 8301 sur des panneaux de dimensions 600 x 575 mm, à l'épaisseur mesurée. La zone de mesure proprement dite est de dimension 305 x 305 mm. La valeur donnée est une moyenne de cinq éprouvettes pour chacune des conditions de test. Dans les éprouvettes réalisées, les fibres liantes utilisées sont en PET à bas point de fusion (« low melt ») et ont un diamètre de 4,4 décitex et une longueur de 51 mm.

La conductivité thermique moyenne (sur cinq éprouvettes) d'un produit isolant avec un rapport massique de flocons de laine de verre « Comblissimo » sur des fibres de bois de 80/20 (épaisseur mesurée de 57 mm) et 7,5 % de liant PET est de 33,6 mW/m.K (± 0,3 mW/m.K) pour une densité comprise entre 39,9 et 51,8 kg/m³_{.}

La conductivité thermique moyenne (sur cinq éprouvettes) d'un produit isolant avec un rapport massique de flocons de laine de verre « Comblissimo » sur des fibres de bois de 65/35 (épaisseur mesurée de 58 mm) et 7,5% de liant PET est de 34,7 mW/m.K (± 0,3 mW/m.K) pour une densité comprise entre 41,9 et 43,4 kg/m³.

La conductivité thermique moyenne (sur cinq éprouvettes) d'un produit isolant avec un rapport massique de flocons de laine de verre « Comblissimo » sur des fibres de bois de 50/50 (épaisseur mesurée de 59 mm) et 7,5% de liant PET est de 35,2 mW/m.K (± 0,3 mW/m.K) pour une densité comprise entre 40,3 et 41,9 kg/m³.

La conductivité thermique moyenne (sur cinq éprouvettes) d'un produit isolant avec un rapport massique de flocons de laine de verre « Comblissimo » sur des fibres de bois de 40/60 et 10% de liant PET est de 35,8 mW/m.K (± 0,2 mW/m.K) pour une densité comprise entre 34,6 et 36,9 kg/m³.

Ainsi, la conductivité thermique du produit isolant augmente lorsque la masse de bois par rapport à la masse de laine de verre augmente. Cela permet de proposer une gamme variée de produits isolants selon l'invention. Cela prouve également que la conductivité de produits isolants à base de fibres végétales est améliorée grâce à l'invention.

De plus, une éprouvette a été réalisée dans laquelle les flocons de laine minérale ont été remplacés par des fibres de bois. La conductivité thermique mesurée est de 38 mW/m.K, ce qui confirme que le produit isolant selon l'invention est meilleur isolant qu'un produit isolant à base de bois seulement.

De plus, des mesures de résistivité au passage de l'air suivant la norme EN29053, ont également été réalisées sur des éprouvettes de diamètres 300mm découpées dans les éprouvettes de mesure de la conductivité thermique.

La résistivité au passage de l'air d'une éprouvette de produit isolant avec un rapport massique de flocons de laine de verre « Comblissimo » sur des fibres de bois de 80/20 et 7,5 % de liant PET est de 25,7 kPa.s/m² (± 13,5 kPa.s/m²) pour une densité comprise entre 39,9 et 51,8 kg/m³.

La résistivité au passage de l'air d'une éprouvette de produit isolant avec un rapport massique de flocons de laine de verre « Comblissimo » sur des fibres de bois de 65/35 et 7,5% de liant PET est de 15,3 kPa.s/m² (± 1,0 kPa.s/m²) pour une densité comprise entre 41,9 et 43,4 kg/m³.

La résistivité au passage de l'air d'une éprouvette de produit isolant avec un rapport massique de flocons de laine de verre « Comblissimo » sur des fibres de bois de 50/50 et 7,5% de liant PET est de 12,4 kPa.s/m² (± 1,7 kPa.s/m²) pour une densité comprise entre 40,3 et 41,9 kg/m³.

La résistivité au passage de l'air d'une éprouvette de produit isolant avec un rapport massique de flocons de laine de verre « Comblissimo » sur des fibres de bois de 40/60 et 10% de liant PET est de 13,6 kPa.s/m² (± 0,8 kPa.s/m²) pour une densité comprise entre 37,5 et 39,2 kg/m³.

Cela prouve que la résistivité au passage de l'air augmente et la conductivité thermique diminue lorsque la quantité de laine de verre augmente. Ainsi l'association fibre végétale + flocon de verre + liant avec procédé airlay permettrait de constituer un matelas étonnamment résistif en regard de sa porosité.

Le produit isolant selon l'invention permet d'améliorer la conductivité thermique et la résistance à l'air d'un produit isolant dérivé de matières biosourcées.

## Revendications

1. Produit isolant comprenant :
- des fibres d'origine végétale,
- des fibres liantes, et
- des nodules ou flocons de laine minérale, étant des fibres en paquets, et non des fibres individualisées,
les fibres d'origine végétale et/ou les fibres liantes formant des fibres d'armature organisées en réseau, et les nodules ou flocons de laine minérale étant incorporés dans des interstices du réseau de fibres d'armature.

2. Produit isolant selon la revendication 1, dans lequel les fibres d'origine végétales sont des fibres de bois ou des fibres de chanvre.

3. Produit isolant selon la revendication 1 ou 2, dans lequel les fibres liantes sont en polyester ou en polyoléfine ou en polymère thermodurcissable gainé d'un polymère thermoplastique, de préférence en polyéthylène téréphtalate (PET) gainées d'une polyoléfine telle que le polypropylène (PP) ou le polyéthylène (PE).

4. Produit isolant selon l'une des revendications 1 à 3, dans lequel les nodules ou flocons de laine minérale sont en laine de verre avec un micronaire inférieur à 15 L/min, notamment inférieur à 12 L/min, de préférence inférieur à 10 L/min, notamment compris entre 3 et 7 L/min, tout particulièrement de 5 à 6 L/min ou en laine de roche avec un fasonaire d'au moins 250.

5. Produit isolant selon l'une des revendications 1 à 4, dans lequel les nodules ou flocons de laine minérale ont une longueur comprise entre 0,3 et 3 cm, notamment entre 0,5 et 2 cm.

6. Produit isolant selon l'une des revendications 1 à 5, dans lequel le rapport massique des nodules ou flocons de laine minérale sur les fibres d'origine végétale est compris entre 85/15 et 20/80 et le pourcentage de fibres liantes est compris entre 3 et 15 % de la masse totale.

7. Produit isolant selon l'une des revendications 1 à 6, dans lequel les fibres d'origine végétale ont un diamètre compris entre 0,8 et 55 décitex, de préférence entre 0,8 et 25 décitex ou entre 25 et 55 décitex, de façon encore préférée entre 0,8 et 17 décitex, et une longueur comprise entre 0,2 et 20 mm, de préférence entre 0,3 et 4 mm.

8. Procédé de formation d'un produit isolant selon l'une quelconque des revendications 1 à 7, comprenant les étapes suivantes :
- fourniture de fibres d'origine végétale, de fibres liantes et de nodules ou flocons de laine minérale étant des fibres en paquets et non des fibres individualisées,
- mélange des fibres d'origine végétale, des fibres liantes et des nodules ou flocons de laine minérale,
- formation d'un matelas à partir du mélange par un procédé mécanique,
- passage du matelas dans une étuve.

9. Procédé selon la revendication 8, dans lequel la formation du matelas est réalisée par voie aéraulique ou par aiguilletage.

10. Procédé selon l'une des revendications 8 ou 9, dans lequel les nodules ou flocons de laine minérale fournis sont en laine minérale du type à souffler, de préférence dépourvus de liant, et peuvent contenir des additifs anti-poussière et/ou anti-statique.

11. Procédé selon l'une des revendications 8 à 10, dans lequel les fibres d'origine végétales fournies sont des fibres de bois ou des fibres de chanvre.

12. Procédé selon l'une des revendications 8 à 11, dans lequel les fibres liantes fournies sont en polyester ou en polyoléfine ou en polymère thermodurcissable gainé d'un polymère thermoplastique, de préférence en polyéthylène téréphtalate (PET) gainées d'une polyoléfine telle que le polypropylène (PP) ou le polyéthylène (PE).

13. Procédé selon l'une des revendications 8 à 12, dans lequel les nodules ou flocons de laine minérale fournies sont en laine de verre avec un micronaire inférieur à 15 L/min, notamment inférieur à 12 L/min, de préférence inférieur à 10 L/min, notamment compris entre 3 et 7 L/min, tout particulièrement de 5 à 6 L/min ou en laine de roche avec un fasonaire d'au moins 250.

14. Procédé selon l'une des revendications 8 à 13, dans lequel les nodules ou flocons de laine minérale fournis ont une longueur comprise entre 0,3 et 3 cm, notamment entre 0,5 et 2 cm.

15. Procédé selon l'une des revendications 8 à 14, dans lequel le rapport massique des nodules ou flocons de laine minérale fournis sur les fibres d'origine végétale fournies est compris entre 85/15 et 20/80 et le pourcentage de fibres liantes fournies est compris entre 3 et 15 % de la masse totale.

16. Procédé selon l'une des revendications 8 à 15, dans lequel les fibres d'origine végétale fournies ont un diamètre compris entre 0,8 et 55 décitex, de préférence entre 0,8 et 25 décitex ou entre 25 et 55 décitex, de façon encore préférée entre 0,8 et 17 décitex, et une longueur comprise entre 0,2 et 20 mm, de préférence entre 0,3 et 4 mm.

17. Procédé selon l'une des revendications 8 à 16, dans lequel les nodules ou flocons de laine minérale fournis sont issus d'une laine minérale ayant une résistance au passage de l'air supérieure ou égale à 10 kPa.s/m² pour une densité supérieure ou égale à 15 kg/m³.

## Patentansprüche

1. Isolierendes Produkt, umfassend:
- Fasern pflanzlichen Ursprungs
- Binderfasern, und
- Knollen oder Flocken aus Mineralwolle, die Faserpacken und keine einzelnen Fasern sind,
wobei die Pflanzenfasern und/oder die Binderfasern netzförmig angeordnete Verstärkungsfasern bilden und die Knollen oder Flocken aus Mineralwolle in den Zwischenräumen des Netzes aus Verstärkungsfasern eingefügt sind.

2. Isolierendes Produkt nach Anspruch 1, wobei die Pflanzenfasern Holzfasern oder Hanffasern sind.

3. Isolierendes Produkt nach Anspruch 1 oder 2, wobei die Binderfasern aus Polyester oder aus Polyolefin oder aus einem wärmehärtbaren Polymer sind, das aus einem thermoplastischen Polymer gewonnen wurde, vorzugsweise aus Polyethylenterephthalat(PET), das aus einem Polyolefin gewonnen wurde, wie Polypropylen (PP) oder Polyethylen (PE).

4. Isolierendes Produkt nach einem der Ansprüche 1 bis 3, wobei die Knollen oder Flocken aus Mineralwolle aus Glaswolle mit einem Micronaire-Wert von weniger als 15 l/min, besonders weniger als 12 l/min, vorzugsweise weniger als 10 l/min, besonders im Bereich zwischen 3 und 7 l/min, insbesondere von 5 bis 6 l/min, oder aus Steinwolle mit einem Fasonairewert von mindestens 250 sind.

5. Isolierendes Produkt nach einem der Ansprüche 1 bis 4, wobei die Knollen oder Flocken aus Mineralwolle eine Länge im Bereich zwischen 0,3 und 3 cm, besonders zwischen 0,5 und 2 cm aufweisen.

6. Isolierendes Produkt nach einem der Ansprüche 1 bis 5, wobei das Massenverhältnis der Knollen oder Flocken aus Mineralwolle zu den Pflanzenfasern im Bereich zwischen 85/15 und 20/80 liegt und der Prozentsatz der Binderfasern im Bereich zwischen 3 und 15 % der Gesamtmasse liegt.

7. Isolierendes Produkt nach einem der Ansprüche 1 bis 6, wobei die Pflanzenfasern einen Durchmesser im Bereich zwischen 0,8 und 55 Dezitex, vorzugsweise zwischen 0,8 und 25 Dezitex oder zwischen 25 und 55 Dezitex, noch bevorzugter zwischen 0,8 und 17 Dezitex, und eine Länge im Bereich zwischen 0,2 und 20 mm, vorzugsweise zwischen 0,3 und 4 mm aufweisen.

8. Verfahren zum Bilden eines isolierenden Produktes nach einem der Ansprüche 1 bis 7, umfassend die folgenden Schritte:
- Bereitstellen von Pflanzenfasern, Binderfasern und Knollen oder Flocken aus Mineralwolle, die Faserpacken und keine einzelnen Fasern sind,
- Mischen der Pflanzenfasern, Binderfasern und Knollen oder Flocken aus Mineralwolle,
- Bilden einer Matte ausgehend von dem Gemisch durch ein mechanisches Verfahren,
- Durchführen der Matte durch einen Trocknungsofen.

9. Verfahren nach Anspruch 8, wobei das Bilden der Matte auf pneumatischem Weg oder durch Vernadeln umgesetzt wird.

10. Verfahren nach einem der Ansprüche 8 oder 9, wobei die bereitgestellten Knollen oder Flocken aus Mineralwolle in Form von Einblaswolle sind, vorzugsweise binderlos sind und Staubschutz- und oder antistatische Additive enthalten können.

11. Verfahren nach einem der Ansprüche 8 bis 10, wobei die bereitgestellten Pflanzenfasern Holzfasern oder Hanffasern sind.

12. Verfahren nach einem der Ansprüche 8 bis 11, wobei die bereitbestellen Binderfasern aus Polyester oder aus Polyolefin oder aus einem wärmehärtbaren Polymer sind, das aus einem thermoplastischen Polymer gewonnen wurde, vorzugsweise aus Polyethylenterephthalat (PET), das aus einem Polyolefin gewonnen wurde, wie Polypropylen (PP) oder Polyethylen (PE).

13. Verfahren nach einem der Ansprüche 8 bis 12, wobei die die bereitgestellten Knollen oder Flocken aus Mineralwolle aus Glaswolle mit einem Micronaire-Wert von weniger als 15 l/min, besonders weniger als 12 l/min, vorzugsweise weniger als 10 l/min, besonders im Bereich zwischen 3 und 7 l/min, insbesondere von 5 bis 6 l/min, oder aus Steinwolle mit einem Fasonairewert von mindestens 250 sind.

14. Verfahren nach einem der Ansprüche 8 bis 13, wobei die bereitgestellten Knollen oder Flocken aus Mineralwolle eine Länge im Bereich zwischen 0,3 und 3 cm, besonders zwischen 0,5 und 2 cm aufweisen.

15. Verfahren nach einem der Ansprüche 8 bis 14, wobei das Massenverhältnis der bereitgestellten Knollen oder Flocken aus Mineralwolle zu den Pflanzenfasern im Bereich zwischen 85/15 und 20/80 liegt und der Prozentsatz der Binderfasern im Bereich zwischen 3 und 15 % der Gesamtmasse liegt.

16. Verfahren nach einem der Ansprüche 8 bis 15, wobei die bereitgestellten Pflanzenfasern einen Durchmesser im Bereich zwischen 0,8 und 55 Dezitex, vorzugsweise zwischen 0,8 und 25 Dezitex oder zwischen 25 und 55 Dezitex , noch bevorzugter zwischen 0,8 und 17 Dezitex, und eine Länge im Bereich zwischen 0,2 und 20 mm, vorzugsweise zwischen 0,3 und 4 mm aufweisen.

17. Verfahren nach einem der Ansprüche 8 bis 16, wobei die bereitgestellten Knollen oder Flocken aus Mineralwolle aus einer Mineralwolle hervorgehen, die einen Luftströmungswiderstand von mehr als oder gleich 10 kPa.s/m² bei einer Dichte von mehr als oder gleich 15 kg/m³ aufweist.

## Claims

1. Insulating product comprising:
- fibres of vegetal origin,
- bonding fibres, and
- nodules or flakes of mineral wool, being fibres in bundles and not individual fibres,
the fibres of vegetal origin and/or the bonding fibres forming armature fibres arranged as a network and the nodules or flakes of mineral wool being incorporated in holes of the network of armature fibres.

2. Insulating product according to Claim 1, in which the fibres of vegetal origin are wood fibres or hemp fibres.

3. Insulating product according to Claim 1 or 2, in which the bonding fibres are made of polyester or of polyolefin or of thermosetting polymer sheathed with a thermoplastic polymer, preferably made of polyethylene terephthalate (PET) sheathed with a polyolefin, such as polypropylene (PP) or polyethylene (PE).

4. Insulating product according to one of Claims 1 to 3, in which the nodules or flakes of mineral wool are made of glass wool with a micronaire of less than 15 l/min, in particular of less than 12 l/min, preferably of less than 10 l/min, in particular of between 3 and 7 l/min, very particularly from 5 to 6 l/min, or made of rock wool with a fasonaire of at least 250.

5. Insulating product according to one of Claims 1 to 4, in which the nodules or flakes of mineral wool have a length of between 0.3 and 3 cm, in particular between 0.5 and 2 cm.

6. Insulating product according to one of Claims 1 to 5, in which the mass ratio of the nodules or flakes of mineral wool to the fibres of vegetal origin is between 85/15 and 20/80 and the percentage of bonding fibres is between 3% and 15% of the total weight.

7. Insulating product according to one of Claims 1 to 6, in which the fibres of vegetal origin have a diameter of between 0.8 and 55 decitex, preferably between 0.8 and 25 decitex or between 25 and 55 decitex, more preferably between 0.8 and 17 decitex, and a length of between 0.2 and 20 mm, preferably between 0.3 and 4 mm.

8. Process for the formation of an insulating product according to any one of Claims 1 to 7, comprising the following stages:
- providing fibres of vegetal origin, bonding fibres and nodules or flakes of mineral wool, being fibres in bundles and not individual fibres,
- mixing the fibres of vegetal origin, bonding fibres and nodules or flakes of mineral wool,
- forming a mat from the mixture by a mechanical process,
- passing the mat through an oven.

9. Process according to Claim 8, in which the mat is formed by the airlaid technique or by needling.

10. Process according to either of Claims 8 and 9, in which the nodules or flakes of mineral wool provided are made of mineral wool of the loose-fill type, are preferably binderless and can comprise antidust and/or antistatic additives.

11. Process according to one of Claims 8 to 10, in which the fibres of vegetal origin provided are wood fibres or hemp fibres.

12. Process according to one of Claims 8 to 11, in which the bonding fibres provided are made of polyester or of polyolefin or of thermosetting polymer sheathed with a thermoplastic polymer, preferably made of polyethylene terephthalate (PET) sheathed with a polyolefin, such as polypropylene (PP) or polyethylene (PE).

13. Process according to one of Claims 8 to 12, in which the nodules or flakes of mineral wool provided are made of glass wool with a micronaire of less than 15 l/min, in particular of less than 12 l/min, preferably of less than 10 l/min, in particular of between 3 and 7 l/min, very particularly from 5 to 6 l/min, or made of rock wool with a fasonaire of at least 250.

14. Process according to one of Claims 8 to 13, in which the nodules or flakes of mineral wool provided have a length of between 0.3 and 3 cm, in particular between 0.5 and 2 cm.

15. Process according to one of Claims 8 to 14, in which the mass ratio of the nodules or flakes of mineral wool provided to the fibres of vegetal origin provided is between 85/15 and 20/80 and the percentage of bonding fibres provided is between 3% and 15% of the total weight.

16. Process according to one of Claims 8 to 15, in which the fibres of vegetal origin provided have a diameter of between 0.8 and 55 decitex, preferably between 0.8 and 25 decitex or between 25 and 55 decitex, more preferably between 0.8 and 17 decitex, and a length of between 0.2 and 20 mm, preferably between 0.3 and 4 mm.

17. Process according to one of Claims 8 to 16, in which the nodules or flakes of mineral wool provided result from a mineral wool having a resistance to air flow of greater than or equal to 10 kPa.s/m² for a density of greater than or equal to 15 kg/m³.
